# EUROPÄISCHE PATENTSCHRIFT

(11) **EP 1 298 898 B1**
(45) Veröffentlichungstag und Bekanntmachung des Hinweises auf die Patenterteilung: **19.12.2012**
(21) Anmeldenummer: 02102276.9
(22) Anmeldetag: 03.09.2002
(51) Int. Cl.: H04M 3/22, H04Q 1/10, H04L 29/00

(54) **Verfahren zum Konfigurieren einer Anlage mit mehreren Peripheriebaugruppen sowie Anlage und Steckverbinder zur Realisierung des Verfahrens**
Method for the configuration of a telecommunications installation with plural peripheral modules and installation and connector for realizing the method
Méthode pour la configuration d'une installation de télécommunication à plusieurs composants périphériques et installation et connecteur pour réaliser la méthode

(30) Priorität: 27.09.2001 DE 10147757
(43) Veröffentlichungstag der Anmeldung: 02.04.2003
(73) Patentinhaber: Siemens Enterprise Communications GmbH & Co. KG, 81379 München (DE)
(72) Erfinder: Grob, Volker, 85276 Pfaffenhofen/Ilm (DE)
(74) Vertreter: Fritzsche, Thomas

(56) Entgegenhaltungen:
- EP-A- 0 642 276
- EP-A- 0 719 058
- EP-A- 0 917 377
- EP-A- 1 098 500
- DE-A1- 19 701 603
- DE-A1- 19 812 901
- DE-A1- 19 956 964
- GB-A- 2 202 062
- US-A- 5 910 776

## Beschreibung

Die Erfindung betrifft ein Verfahren zum Konfigurieren einer Anlage, insbesondere einer Telekommunikationsanlage, mit mehreren Peripheriebaugruppen, an die externe Geräte mittels Steckverbindern anschließbar sind. Die Erfindung betrifft weiterhin eine Anlage, insbesondere eine Telekommunikationsanlage, zur Realisierung des erfindungsgemäßen Verfahrens.

Zeitgemäße Telekommunikationsanlagen verfügen in der Regel über eine Vielzahl verschiedener Peripheriebaugruppen zum Anschluss externer Geräte, wie z.B. externer Kommunikationsendgeräte. Die externen Geräte werden dabei im Allgemeinen über mit Steckverbindern versehene Kabel an die Peripheriebaugruppen angeschlossen. In der Praxis ist insbesondere bei großen Telekommunikationsanlagen häufig eine beträchtliche Anzahl von Kabeln - oft mehrere hundert - an eine Vielzahl von Peripherieeinrichtungen anzuschließen. Aufgrund der sehr großen Anzahl anzuschließender Kabel gestaltet sich eine Verkabelung einer größeren Telekommunikationsanlage meist als sehr unübersichtlich und damit fehlerträchtig.

Nach der bisherigen Praxis wird eine Verkabelung einer Telekommunikationsanlage dadurch überprüft, dass von jedem angeschlossenen Endgerät aus ein Anruf an die Telekommunikationsanlage gerichtet wird. Falls auf diese weise ein Fehlanschluss eines Endgerätes erkannt wird, ist entweder das betreffende Kabel umzustecken oder eine Kabelzuordnung in den Konfigurationsdaten der Telekommunikationsanlage durch manuellen Eingriff zu ändern. Diese Praxis der Überprüfung und Korrektur einer Verkabelung ist jedoch in der Regel sehr arbeits- und zeitaufwändig. Entsprechend gestaltet sich auch jede später vorzunehmende Änderung der Anlagenbeschaltung oder der Endgerätezuordnung als sehr aufwändig.

In EP 0642 276 A2 ist ein Kabelmanagementsystem für ein Gebäude beschrieben, bei dem Baugruppen mit einer "service termination unit" für in das Gebäude hineinführende Leitungen und Baugruppen mit einer "line termination unit" für aus dem Gebäude herausführende Leitungen über Steckplätze auf sich gegenüberliegenden Seiten einer zentralen Leiterplatte miteinander verbunden sind. Die Steckplätze sind mit einem Code codiert, der von der jeweiligen Baugruppe ausgelesen wird. Ein von einer Management Station gesteuerter zentraler Controller überträgt Schaltbefehle an jede Baugruppe mit einer "service termination unit" derart, dass die Baugruppe ermitteln kann, ob und wo eine Baugruppe mit einer "line termination unit" auf der anderen Seite der zentralen Leiterplatte vorhanden ist. Die Leitungen für verschiedene Medien, in EP 0642 276 A2 "services" genannt, sind derart mit spezifischen Steckern versehen, dass beispielsweise ein Telefcnanschluss mit einem Videoanschluss nicht vertauscht werden kann. Ein Fehlanschluss durch Vertauschen gleichartiger Kabel ist allerdings möglich und wird von der Management Station nicht erkannt. Eine Verkabelung von an die Baugruppen anzuschließenden externen Geräten wird folglich nicht vereinfacht.

Es ist Aufgabe der vorliegenden Erfindung ein Verfahren zum Konfigurieren einer Anlage, insbesondere einer Telekommunikationsanlage, mit mehreren Peripheriebaugruppen anzugeben, das gegenüber dem Stand der Technik vereinfacht und weniger fehlerträchtig ist. Es ist weiterhin Aufgabe der Erfindung eine Anlage zur Realisierung des Verfahrens anzugeben.

Gelöst wird diese Aufgabe durch ein Verfahren mit den Merkmalen des Patentanspruchs 1 und durch eine Anlage mit den Merkmalen des Patentanspruchs 13.

Beim erfindungsgemäßen Verfahren wird durch eine Peripheriebaugruppe eine über einen daran angeschlossenen Steckverbinder abgegebene Anschlusskennung erfasst und zu einer Prozessoreinrichtung übermittelt. Weiterhin wird eine diese Peripheriebaugruppe identifizierende Peripherieadresse zur Prozessoreinrichtung übermittelt. Die Prozessoreinrichtung ordnet daraufhin die durch die übermittelte Peripherieadresse identifizierte Peripheriebaugruppe und einen durch die übermittelte Anschlusskennung identifizierten Anschluss einander betriebstechnisch zu.

Auf diese Weise kann durch eine erfindungsgemäße Anlage festgestellt werden, an welcher Peripheriebaugruppe der Anlage ein jeweiliges externes Gerät oder ein zu diesem führendes Kabel angeschlossen ist. Ein jeweiliges externes Gerät bzw. ein jeweiliges Anschlusskabel kann dabei durch die erfasste Anschlusskennung identifiziert werden.

Durch die betriebstechnische Zuordnung kann die Anlage automatisch so konfiguriert werden, dass eine nachfolgende Ansteuerung eines externen Geräts selbständig über die jeweils zugeordnete Peripheriebaugruppe geführt wird. Durch die automatische Konfiguration verringert sich der Verkabelungsaufwand für eine derartige Anlage beträchtlich.

Ein weiterer Vorteil der Erfindung besteht darin, dass bei Anschlussänderungen, z.B. bei Anschluss weiterer externer Geräte oder beim Umstecken eines externen Geräts, meist keine manuelle Änderung von Konfigurationsdaten der Anlage erforderlich ist.

Vorteilhafte Ausführungsformen und Weiterbildungen der Erfindung sind in den abhängigen Ansprüchen angegeben.

Nach einer vorteilhaften Ausführungsform der Erfindung kann die Anschlusskennung in einem Steckverbinder kodiert sein und von diesem an die Peripheriebaugruppe abgegeben werden. Die Anschlusskennung kann dabei durch einen beliebigen mechanischen, elektrischen oder elektronischen Informationsträger, wie z.B. durch Drahtbrücken, Kodierschalter oder Kodierstifte, kodiert sein.

Weiterhin kann die Anschlusskennung in einem mittels des Steckverbinders angeschlossenen externen Gerät kodiert sein und von diesen an die Peripheriebaugruppe abgebeben werden.

Nach einer weiteren vorteilhaften Ausführungsform der Erfindung kann durch die Anschlusskennung ein Anschlusskabel identifiziert werden. Die Anschlusskennung kann in diesem Fall eine Kabelkennung sein, die in einem Steckverbinder des Kabels oder in einem an das Kabel angeschlossenen externem Gerät kodiert ist. Nach einer weiteren vorteilhaften Ausführungsform kann die Anschlusskennung eine ein jeweiliges externes Gerät identifizierende Endgerätekennung oder Teilnehmerkennung, z.B. eine Rufnummer, sein. Die Anschlusskennung kann insbesondere gerätespezifisch, kabelspezifisch und/oder teilnehmerspezifisch sein.

Nach einer vorteilhaften Weiterbildung der Erfindung kann sich die Peripherieadresse aus mehreren Teiladressen zusammensetzen. So kann die Peripherieadresse beispielsweise durch eine einen Baugruppenträger identifizierende Baugruppenträgeradresse und eine einen Steckplatz innerhalb dieses Baugruppenträgers identifizierende Steckplatzadresse gebildet sein. Hierbei kann z.B. die Steckplatzadresse vom betreffenden Baugruppenträger und die Baugruppenträgeradresse von einer zentralen Peripheriesteuerung zur Prozessoreinrichtung übermittelt werden.

Nach einer weiteren vorteilhaften Weiterbildung der Erfindung kann vor dem Einrichten der betriebstechnischen Zuordnung diese anhand einer Sollzuordnung überprüft werden. Bei negativem Prüfungsergebnis kann dann ein Fehlerzustand angezeigt werden.

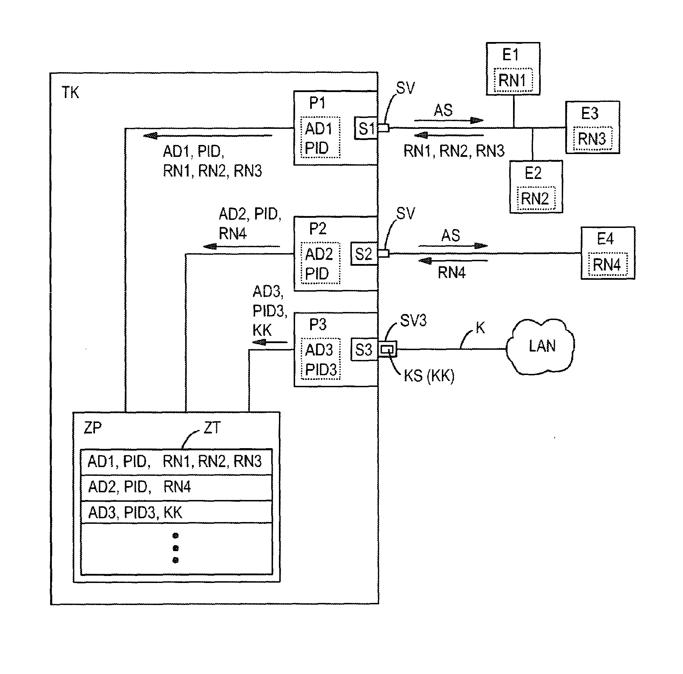

Ein Ausführungsbeispiel der Erfindung wird nachfolgend anhand der Zeichnung näher erläutert.
Die Figur zeigt eine Telekommunikationsanlage mit mehreren angeschlossenen externen Geräten in schematischer Darstellung

In der Figur ist eine Telekommunikationsanlage TK mit mehreren Peripheriebaugruppen P1, P2 und P3 schematisch dargestellt. Über die Peripheriebaugruppen P1, P2 und P3 sind Kommunikationsendgeräte E1, E2, E3 und E4 als externe Geräte sowie ein lokales Netz LAN an die Telekommunikationsanlage TK angeschlossen. Die Telekommunikationsanlage TK verfügt über eine mit den Peripheriebaugruppen P1, P2 und P3 gekoppelte, zentrale Prozessoreinrichtung ZP mit einer Zuordnungstabelle ZT. Den Kommunikationsendgeräten E1, E2, E3 und E4 sind in dieser Reihenfolge - wie in der Figur durch punktierte Rechtecke angedeutet - Rufnummern RN1, RN2, RN3 und RN4 als teilnehmer- oder endgerätespezifische Anschlusskennungen zugeordnet. Die Rufnummern RN1,...,RN4 identifizieren das jeweils zugeordnete Kommunikationsendgerät E1, E2, E3 bzw. E4 zumindest anlagenweit eindeutig. Anstelle der Rufnummern RN1,...,RN4 können auch andere, ein jeweiliges Kommunikationsendgerät identifizierende Anschlusskennungen, wie z.B. Netzwerk- oder Hardware-Adressen beim erfindungsgemäßen Verfahren zur Identifizierung der Kommunikationsendgeräte verwendet werden.

Im vorliegenden Ausführungsbeispiel sind die Kommunikationsendgeräte E1, E2 und E3 an die Peripheriebaugruppe P1 und das Kommunikationsendgerät E4 an die Peripheriebaugruppe P2 mittels eingesteckter Steckverbinder SV angeschlossen. Das lokale Netz LAN, an das z.B. Personalcomputer (nicht dargestellt) als weitere externe Geräte angekoppelt sein können, ist über ein mit einem Steckverbinder SV3 versehenes Anschlusskabel K, z.B. ein Ethernet-Kabel, an die Peripheriebaugruppe P3 angeschlossen. Der an die Peripheriebaugruppe P3 angesteckte Steckverbinder SV3 enthält ein Kodierschalterarray KS als Informationsträger für eine Kabelkennung KK. Die Kabelkennung KK, die als Anschlusskennung dem Anschlusskabel K zugeordnet ist, wird durch die Schalterstellungen des Kodierschalterarrays KS kodiert. Durch die Kabelkennung KK wird das Anschlusskabel K und/oder dessen Kabeltyp anlagenweit eindeutig identifiziert.

Zur Identifizierung gegenüber der zentralen Prozessoreinrichtung ZP ist der Peripheriebaugruppe P1 eine Peripherieadresse AD1, der Peripheriebaugruppe P2 eine Peripherieadresse AD2 und der Peripheriebaugruppe P3 eine Peripherieadresse AD3 zugeordnet. Die Peripherieadressen AD1, AD2 und AD3 können dabei z.B. jeweils als Steckplatzadresse ausgebildet sein, die einen Steckplatz der betreffenden Peripheriebaugruppe identifiziert. Alternativ dazu können die Peripherieadressen AD1, AD2 und AD3 jeweils aus einer Baugruppenträgeradresse, die einen Baugruppenträger, in den die betreffende Peripheriebaugruppe eingesteckt ist, identifiziert, und einer einen Steckplatz innerhalb dieses Baugruppenträgers identifizierenden Steckplatzadresse gebildet sein. Weiterhin ist den Peripheriebaugruppen P1 und P2 jeweils eine Peripherietypkennung PID und der Peripheriebaugruppe P3 eine Peripherietypkennung PID3 zugeordnet. Durch die typspezifischen Peripherientypkennungen PID und PID3 wird ein jeweiliger Peripherietyp identifiziert. Im vorliegenden Ausführungsbeispiel werden die Peripheriebaugruppen P1 und P2 jeweils durch die Peripherietypkennung PID als ISDN-Schnittstellen und die Peripheriebaugruppe P3 durch die Peripherietypkennung PID3 als Netzwerkschnittstelle identifiziert.

Die Peripheriebaugruppe P1 weist ferner eine Schnittstelle S1 und die Peripheriebaugruppe P2 eine Schnittstelle S2 auf. Die Schnittstellen S1 und S2 dienen jeweils zur Rufnummernabfrage angeschlossener Endgeräte, hier E1, E2 und E3 bzw. E4. Die Peripheriebaugruppe P3 verfügt demgegenüber über eine Schnittstelle S3 zur Erfassung der Schalterstellungen eines Kodierschalterarrays, hier KS, in einem angesteckten Steckverbinder, hier SV3.

Im Rahmen des erfindungsgemäßen Verfahrens wird über die Schnittstelle S1 der Peripheriebaugruppe P1 ein Abfragesignal AS zu allen daran angeschlossenen Kommunikationsendgeräten E1, E2 und E3 übermittelt. Infolgedessen übertragen die Kommunikationsendgeräte E1, E2 und E3 ihre zugeordneten Rufnummern RN1, RN2 und RN3 zur Peripheriebaugruppe P1, wo die Rufnummern RN1, RN2 und RN3 über die Schnittstelle S1 erfasst werden. Die erfassten Rufnummern RN1, RN2 und RN3 werden daraufhin zusammen mit der Peripherieadresse AD1 und der Peripherietypkennung PID der Peripheriebaugruppe P1 von dieser zur zentralen Prozessoreinrichtung ZP übermittelt. Die zentrale Prozessoreinrichtung ZP speichert sodann die Peripherieadresse AD1, die Peripherietypkennung PID, sowie die Rufnummern RN1, RN2 und RN3 in der Zuordnungstabelle ZT einander betriebstechnisch zugeordnet ab. Analog dazu veranlasst die Peripheriebaugruppe P2 das Kommunikationsendgerät E4 durch Übermitteln eines Anfragesignals AS zur Abgabe ihrer Rufnummer RN4, die über die Schnittstelle S2 erfasst wird. Die erfasste Rufnummer RN4 wird von der Peripheriebaugruppe P2 zusammen mit deren Peripherieadresse AD2 und Peripherietypkennung PID zur zentralen Prozessoreinrichtung ZP übermittelt. Diese speichert daraufhin die Peripherieadresse AD2, die Peripherietypkennung PID und die Rufnummer RN4 in der Zuordnungstabelle ZT einander betriebstechnisch zugeordnet ab.

Nach einer alternativen Ausführungsvariante können die Rufnummern RN1,...,RN4 auch ohne Veranlassung durch ein Abfragesignal AS, z.B. automatisch beim Hochlauf der Kommunikationsendgeräte E1,...,E4 übermittelt werden.

Weiterhin wird durch die Schnittstelle S3 der Peripheriebaugruppe P3 die im Steckverbinder SV3 kodierte Kabelkennung KK des Anschlusskabels K erfasst und von der Peripheriebaugruppe P3 zusammen mit deren Peripherieadresse AD3 und Peripherietypkennung PID3 zur zentralen Prozessoreinrichtung ZP übermittelt. Diese speichert die Peripherieadresse AD3, die Peripherietypkennung PID3, sowie die Kabelkennung KK in der Zuordnungstabelle ZT einander betriebstechnisch zugeordnet ab.

Nach einer - insbesondere bei großen Telekommunikationsanlagen - vorteilhaften Ausführungsvariante werden die Peripherieadressen AD1, AD2 und AD3 und/oder die Peripherietypkennungen PID, PID3 zumindest teilweise nicht von der betreffenden Peripheriebaugruppe selbst, sondern von einer für eine oder mehrere Peripheriebaugruppen oder Baugruppenträger zuständigen Steuereinrichtung zur zentralen Prozessoreinrichtung ZP übermittelt.

Durch die Zuordnung der Rufnummern R1,...,R4 und der Kabelkennung KK zu jeweils einer Peripherieadresse AD1, AD2 bzw. AD3 werden die betreffenden externen Geräte denjenigen Peripheriebaugruppen betriebstechnisch zugeordnet, an die sie tatsächlich angeschlossen wurden. Dadurch wird die betriebstechnische Konfiguration der Telekommunikationsanlage TK im Wesentlichen automatisch an die tatsächlich vorgenommene Verkabelung angepasst. Weiterhin ist anhand der in der Zuordnungstabelle ZT zugeordneten Peripherietypkennungen eine im Wesentlichen automatische Prüfung einer korrekten Zuordnung von Peripherietyp und externem Geräte- oder Anschlusstyp möglich. Fehlanschlüsse sind dabei erkennbar und können angezeigt werden.

Das erfindungsgemäße Verfahren kann vorzugsweise beim Hochlauf der Telekommunikationsanlage TK, der externen Geräte und/oder einzelner Peripheriebaugruppen ausgeführt werden. Durch die letztgenannte Variante kann ein Einfügen oder ein Austausch von Peripheriebaugruppen im laufenden Betrieb der Telekommunikationsanlage TK erheblich vereinfacht werden. So kann eine neue Peripheriebaugruppe in einen noch freien Steckplatz der Telekommunikationsanlage TK eingefügt werden, und nach Anschluss der betreffenden externen Geräte ein Hochlauf dieser einzelnen Peripheriebaugruppe veranlasst werden. Durch den Hochlauf dieser Peripheriebaugruppe wird diese automatisch den angeschlossenen externen Endgeräten in der Zuordnungstabelle ZT betriebstechnisch zugeordnet. Es ist damit insbesondere kein zeitaufwändiger Reboot der gesamten Telekommunikationsanlage TK erforderlich.

Das vorstehend beschriebene Ausführungsbeispiel lässt sich ohne Weiteres von der Telekommunikationsanlage TK auf beliebige Anlagen mit mehreren Peripheriebaugruppen verallgemeinern.

## Patentansprüche

1. Verfahren zum Konfigurieren einer Anlage (TK), insbesondere Telekommunikationsanlage, mit mehreren Peripheriebaugruppen (P1, P2, P3) zum Anschluss externer Geräte (E1, E2, E3, E4) mittels Steckverbindern (SV, SV3),
**dadurch gekennzeichnet, dass**
a) eine Peripheriebaugruppe (P1, P2, P3) eine über einen daran angeschlossenen Steckverbinder (SV, SV3) abgegebene Anschlusskennung (RN1, RN2, RN3, RN4, KK) erfasst und zu einer Prozessoreinrichtung (ZP) übermittelt,
b) eine diese Peripheriebaugruppe (P1, P2, P3) identifizierende Peripherieadresse (AD1, AD2, AD3) zur Prozessoreinrichtung (ZP) übermittelt wird, und
c) die Prozessoreinrichtung (ZP) die durch die übermittelte Peripherieadresse (AD1, AD2, AD3) identifizierte Peripheriebaugruppe (P1, P2, P3) und einen durch die übermittelte Anschlusskennung (RN1, RN2, RN3, RN4, KK) identifizierten Anschluss einander betriebstechnisch zugeordnet abspeichert, wobei die externen Geräte (E1, E2, E3, E4) denjenigen Peripheriebaugruppen (P1, P2, P3) betriebstechnisch zugeordnet werden, an die sie angeschlossen sind.

2. Verfahren nach Anspruch 1,
**dadurch gekennzeichnet,**
**dass** die Anschlusskennung (KK) im Steckverbinder (SV3) kodiert ist und von diesem an die Peripheriebaugruppe (P3) abgegeben wird.

3. Verfahren na.ch Anspruch 1,
**dadurch gekennzeichnet,**
**dass** die Anschlusskennung (RN1, RN2, RN3, RN4) in einem
mittels des Steckverbinders (SV) angeschlossenen, externen Gerät (E1, E2, E3) kodiert ist und von diesem an die Peripheriebaugruppe (P1, P2) abgegeben wird.

4. Verfahren nach einem der vorhergehenden Ansprüche,
**dadurch gekennzeichnet,**
**dass** durch die Anschlusskennung (KK, RN1, RN2, RN3, RN4) ein Anschlusskabel (K) und/oder ein externes Gerät (E1, E2, E3, E4) identifiziert wird.

5. Verfahren nach Anspruch 4,
**dadurch gekennzeichnet,**
**dass** eine Kabelkennung (KK) als Anschlusskennung dem Anschlusskabel (K) zugeordnet ist und ein an die Peripheriebaugruppe (P3) angesteckter Steckverbinder (SV3) ein Kodierschalterarray (KS) als Informationsträger für die Kabelkennung (KK) enthält.

6. Verfahren nach Anspruch 5,
**dadurch gekennzeichnet,**
**dass** durch die Kabelkennung (KK) das Anschlusskabel (K) und/oder dessen Kabeltyp anlagenweit eindeutig identifiziert wird.

7. Verfahren nach Anspruch 4,
**dadurch gekennzeichnet,**
**dass** als Anschlusskennung (KK, RN1, RN2, RN3, RN4) eine Netzwerk- oder Hardware-Adresse verwendet wird.

8. Verfahren nach einem der vorhergehenden Ansprüche,
**dadurch gekennzeichnet,**
**dass** die Anschlusskennung (RN1, RN2, RN3, RN4) als Teilnehmerkennung ausgeführt wird.

9. Verfahren nach Anspruch 8,
**dadurch gekennzeichnet,**
**dass** die Anschlusskennung (RN1, RN2, RN3, RN4) als Rufnummer ausgeführt wird.

10. Verfahren nach einem der vorhergehenden Ansprüche,
**dadurch gekennzeichnet,**
**dass** die Anschlusskennung (KK, RN1, RN2, RN3, RN4) durch die Peripheriebaugruppe (P1, P2, P3) abgefragt wird.

11. Verfahren nach einem der vorhergehenden Ansprüche,
**dadurch gekennzeichnet,**
**dass** die Peripherieadresse (AD1, AD2, AD3) durch eine Baugruppenträgeradresse und eine Steckplatzadresse gebildet wird.

12. Verfahren nach einem der vorhergehenden Ansprüche,
**dadurch gekennzeichnet,**
**dass** die betriebstechnische Zuordnung zwischen Peripheriebaugruppe (P1, P2, P3) und Anschluss durch Generieren oder Aktualisieren der Zuordnungstabelle (ZT) erfolgt.

13. Verfahren nach einem der vorhergehenden Ansprüche,
**dadurch gekennzeichnet,**
**dass** vor Einrichten der betriebstechnischen Zuordnung diese anhand einer Sollzuordnung überprüft wird, und
**dass** bei negativem Prüfungsergebnis ein Fehlerzustand angezeigt wird.

14. Anlage (TK), insbesondere Telekommunikationsanlage, mit einer Prozessoreinrichtung (ZP) und mit mehreren Peripheriebaugruppen (P1, P2, P3) zum Anschluss externer Geräte (E1, E2, E3, E4) mittels Steckverbindern (SV, SV3), **dadurch gekennzeichnet, dass**
a) die Peripheriebaugruppen (P1, P2, P3) jeweils Erfassungsmittel (S1, S2, S3) zum Erfassen einer über einen daran angeschlossenen Steckverbinder (SV, SV3) abgegebenen Anschlusskennung (KK, RN1, RN2, RN3, RN4) und zum Übermitteln dieser Anschlusskennung (KK, RN1, RN2, RN3, RN4) zur Prozessoreinrichtung (ZP) aufweisen,
b) einer jeweiligen Peripheriebaugruppe (P1, P2, P3) eine diese identifizierende Peripherieadresse (AD1, AD2, AD3) zugeordnet ist, und
c) die Prozessoreinrichtung (ZP) eine Zuordnungstabelle (ZT) zur betriebstechnischen Zuordnung einer durch eine zur Prozessoreinrichtung (ZP) übermittelte Peripherieadresse (AD1, AD2, AD3) identifizierten Peripheriebaugruppe (P1, P2, P3) zu einem durch eine übermittelte Anschlusskennung (KK, RN1, RN2, RN3, RN4) identifizierten Anschluss aufweist, wobei die externen Geräte (E1, E2, E3, E4) denjenigen Peripheriebaugruppen (P1, P2, P3) betriebstechnisch zugeordnet sind, an die sie angeschlossen sind.

15. Anlage nach Patentanspruch 14,
**gekennzeichnet durch**
einen an die Peripheriebaugruppe (P3) angesteckten Steckverbinder (SV3), der einen mechanischen, elektrischen und/oder elektronischen Informationsträger (KS) zum Abgeben der Anschlusskennung (KK) enthält.

## Claims

1. Method for configuring an installation (TK), in particular a telecommunications installation, with a number of peripheral units (P1, P2, P3) for the connection of external devices (E1, E2, E3, E4) by means of plug connectors (SV, SV3) **characterised in that**
a) a peripheral unit (P1, P2, P3) detects a connection identifier (RN1, RN2, RN3, RN4, KK) output via a plug connector connected to it and sends it to a processor device (ZP),
b) a peripheral address (AD1, AD2, AD3) identifying this peripheral unit (P1, P2, P3) is sent to the processor device (ZP), and
c) the processor device (ZP) stores as operationally assigned to each other the peripheral unit (P1, P2, P3) identified by the peripheral address (AD1, AD2, AD3) sent and a connection identified by the connection identifier (RN1, RN2, RN3, RN4, KK) sent, whereby the external devices (E1, E2, E3, E4) are operationally assigned to the peripheral units (P1, P2, P3) to which they are connected.

2. Method according to claim 1, **characterised in that** the connection identifier (KK) is coded in the plug connector (SV3) and output by it to the peripheral unit (P3).

3. Method according to claim 1, **characterised in that** the connection identifier (RN1, RN2, RN3, RN4) is coded in an external device (E1, E2, E3) connected via the plug connector (SV) and output from this to the peripheral unit (P1, P2).

4. Method according to any one of the preceding claims, **characterised in that** a connecting cable (K) and / or an external device (E1, E2, E3, E4) is identified by the connection identifier (KK, RN1, RN2, RN3, RN4).

5. Method according to claim 4, **characterised in that** a cable identifier (KK) is assigned to the connection cable (K) as a connection identifier and a plug connector (SV3) plugged into the peripheral unit (P3) contains a coding circuit array (KS) as an information carrier for the cable identifier (KK),

6. Method according to claim 5, **characterised in that** the connecting cable (K) and
/ or its cable type is unambiguously identified throughout the installation by the cable identifier (KK).

7. Method according to claim 4, **characterised in that** a network or hardware address is used as the connection identifier (KK, RN1, RN2, RN3, RN4).

8. Method according to any one of the preceding claims, **characterised in that** the connection identifier (RN1, RN2, RN3, RN4) is embodied in the form of a subscriber identifier.

9. Method according claim 8, **characterised in that** the connection identifier (RN 1, RN2, RN3, RN4) is embodied in the form of a call number.

10. Method according to any one of the preceding claims, **characterised in that** the connection identifier (KK, RN1, RN2, RN3, RN4) is queried by the peripheral unit (P1, P2, P3).

11. Method according to any one of the preceding claims, **characterised in that** the peripheral address (AD1, AD2, AD3) is formed by a unit carrier address and a plug location address.

12. Method according to any one of the preceding claims, **characterised in that** the operational assignment between the peripheral unit (P1, P2, P3) and the connection occurs by generating or updating the assignment table (ZT).

13. Method according to any one of the preceding claims, **characterised in that**, before the operational assignment is set up, it is checked by a target assignment, and that if the test result is negative, an error status is displayed.

14. Installation (TK), in particular a telecommunications installation, with a processor device (ZP) and with a number of peripheral units (P1, P2, P3) for the connection of external devices (E1, E2, E3, E4) by means of plug connectors (SV, SV3) **characterised in that**
a) the peripheral units (P1, P2, P3) in each case have detection means (S1, S2, S3) to detect a connection identifier (KK, RN1, RN2, RN3, RN4) output via a plug connector connected to them and to send this connection identifier (KK, RN1, RN2, RN3, RN4) to the processor device (ZP),
b) a particular peripheral unit (P1, P2, P3) is assigned a peripheral address (AD1, AD2, AD3) which identifies it, and
c) the processor device (ZP) has an assignment table (ZT) for the operational assignment of a peripheral unit (P1, P2, P3) identified by a peripheral address (AD1, AD2, AD3) sent to the processor device (ZP), to a connection identified by a connection identifier (KK, RN1, RN2, RN3, RN4) sent, whereby the external devices (E1, E2, E3, E4) are operationally allocated to the peripheral units (P1, P2, P3) to which they are connected.

15. Installation according to claim 14, **characterised by** a plug connector (SV3) plugged into the peripheral unit (P3), said plug connector containing a mechanical, electrical and / or electronic information carrier (KS) to output the connection identifier (KK).

## Revendications

1. Procédé pour la configuration d'une installation (TK), en particulier une installation de télécommunication, pourvue de plusieurs composants périphériques (P1, P2, P3) destinés au raccordement d'appareils externes (E1, E2, E3, E4) au moyen de connecteurs (SV, SV3),
**caractérisé en ce que**
a) un composant périphérique (P1, P2, P3) détecte un indicatif de raccordement (RN1, RN2, RN3, RN4, KK) remis par un connecteur (SV, SV3) raccordé au dit composant et le transmet à un dispositif de traitement (ZP),
b) une adresse périphérique (AD1, AD2, AD3) identifiant ce composant périphérique (P1, P2, P3) est transmise au dispositif de traitement (ZP), et
c) le dispositif de traitement (ZP) met en mémoire le composant périphérique (P1, P2, P3), identifié par l'adresse périphérique (AD1, AD2, AD3) transmise, et un raccordement, identifié par l'indicatif de raccordement (RN1, RN2, RN3, RN4, KK) transmis, en les associant fonctionnellement, les appareils externes (E1, E2, E3, E4) étant associés fonctionnellement aux composants périphériques (P1, P2, P3) auxquels ils sont raccordés.

2. Procédé selon la revendication 1, **caractérisé en ce que**,
l'indicatif de raccordement (KK) est codé dans le connecteur (SV3) et est remis par ce dernier au composant périphérique (P3).

3. Procédé selon la revendication 1, **caractérisé en ce que**,
l'indicatif de raccordement (RN1, RN2, RN3, RN4) est codé dans un appareil externe (E1, E2, E3) raccordé au moyen du connecteur (SV) et est remis par ledit appareil externe au composant périphérique (P1, P2).

4. Procédé selon l'une quelconque des revendications précédentes, **caractérisé en ce que**,
un câble de raccordement (K) et/ou un appareil externe (E1, E2, E3, E4) est identifié par l'indicatif de raccordement (KK, RN1, RN2, RN3, RN4).

5. Procédé selon la revendication 4, **caractérisé en ce que**
un indicatif de câble (KK) est associé au câble de raccordement (K) en tant qu'indicatif de raccordement et un connecteur (SV3) enfiché sur le composant périphérique (P3) contient une matrice d'interrupteurs de codage (KS) servant de support d'informations pour l'indicatif de câble (KK).

6. Procédé selon la revendication 5, **caractérisé en ce que**
le câble de raccordement (K) et/ou son type de câble est identifié par l'indicatif de câble (KK) sans ambiguïté dans toute l'installation.

7. Procédé selon la revendication 4, **caractérisé en ce que**
une adresse matérielle ou une adresse de réseau sert d'indicatif de raccordement (KK, RN1, RN2, RN3, RN4).

8. Procédé selon l'une quelconque des revendications précédentes, **caractérisé en ce que**
l'indicatif de raccordement (RN1, RN2, RN3, RN4) est exécuté en tant qu'indicatif d'abonné.

9. Procédé selon la revendication 8, **caractérisé en ce que**
l'indicatif de raccordement (RN1, RN2, RN3, RN4) est exécuté en tant que numéro d'appel.

10. Procédé selon l'une quelconque des revendications précédentes, **caractérisé en ce que**
l'indicatif de raccordement (KK, RN1, RN2, RN3, RN4) est interrogé par le composant périphérique (P1, P2, P3).

11. Procédé selon l'une quelconque des revendications précédentes, **caractérisé en ce que**
l'adresse périphérique (AD1, AD2, AD3) est formée par une adresse de châssis et une adresse de place d'insertion.

12. Procédé selon l'une quelconque des revendications précédentes, **caractérisé en ce que**
l'association fonctionnelle entre le composant périphérique (P1, P2, P3) et le raccordement est effectuée par la génération ou l'actualisation du tableau d'association (ZT).

13. Procédé selon l'une quelconque des revendications précédentes, **caractérisé**
**en ce que**, avant l'établissement de l'association fonctionnelle, celle-ci est vérifiée à l'aide d'une association nominale, et
**en ce qu'**un état d'erreur est affiché en cas de résultat négatif de la vérification.

14. Installation (TX), en particulier installation de télécommunication, pourvue d'un dispositif de traitement (ZP) et de plusieurs composants périphériques (P1, P2, P3) destinés au raccordement d'appareils externes (E1, E2, E3, E4) au moyen de connecteurs (SV, SV3), **caractérisée en ce que**
a) les composants périphériques (P1, P2, P3) comportent chacun un moyen de détection (S1, S2, S3) servant à détecter un indicatif de raccordement (KK, RN1, RN2, RN3, RN4) remis par le biais d'un connecteur (SV, SV3) raccordé au dit composant périphérique et à communiquer cet indicatif de raccordement (KK, RN1, RN2, RN3, RN4) au dispositif de traitement (ZP),
b) à chaque composant périphérique (P1, P2, P3) est associée une adresse périphérique (AD1, AD2, AD3) l'identifiant, et
c) le dispositif de traitement (ZP) comporte un tableau d'association (ZT) servant à l'association fonctionnelle d'un composant périphérique (P1, P2, P3), identifié par une adresse périphérique (AD1, AD2, AD3) transmise au dispositif de traitement (ZP), à un raccordement identifié par un indicatif de raccordement (KK, RN1, RN2, RN3, RN4) transmis, les appareils externes (E1, E2, E3, E4) étant associés fonctionnellement aux composants périphériques (P1, P2, P3) auxquels ils sont raccordés.

15. Installation selon la revendication 14, **caractérisé par**
un connecteur (SV3) qui est enfiché sur le composant périphérique (P3) et qui contient un support d'informations (KS) mécanique, électrique et/ou électronique servant à la remise de l'indicatif de raccordement (KK).
